# EUROPEAN PATENT APPLICATION

(11) **EP 2 784 701 A1**
(43) Date of publication of application: **01.10.2014**
(21) Application number: 14160916.4
(22) Date of filing: 20.03.2014
(51) Int. Cl.: G06F 17/30

(54) **Method and system for re-ranking search results in a product search engine**

(30) Priority: 29.03.2013 US 201313853330
(71) Applicant: Wal-Mart Stores, Inc., Bentonville, AR 72716 (US)
(72) Inventor: Cao, Tri Minh, Bentonville, AR Arkansas 72716 (US); Taank, Sumit, Bentonville, AR Arkansas 72716 (US); Gattani, Abhishek, Bentonville, AR Arkansas 72716 (US)
(74) Representative: Brandon, Paul Laurence

(57) **Abstract**

Techniques for providing improved search results for queries are provided. The techniques include a server receiving a query from a customer and identifying a number of product listings corresponding to the query according to relevance scores. The techniques also include identifying a signal associated with each of the product listings, calculating a signal score from a relevance score and a signal value for each of the product listings, creating query results comprising the number of product listings ordered according to the signal score, and transmitting the query results to the customer.

## Description

### BACKGROUND INFORMATION

### Field of the Disclosure

The present invention relates to providing electronic search results to customers. In particular, examples of the present invention relate to an approach for re-ranking search results in search terms or queries which have been entered by a customer to thereby provide more relevant and engaging search results to the customer.

### Background

Many stores provide customers with a website whereby a customer may electronically search for and purchase products. Often, these websites will display/sell a considerable number of items. In many cases, a store website will feature items for sale at brick and mortar locations of the store as well as additional online items not carried in brick and mortar store locations. Store websites may also feature a marketplace where items from other vendors are sold. Additionally, the website may feature product description and information which assists the customer in selecting products for purchase. As stores provide an increasing number of products to customers, it becomes more important that the customer is able to quickly and accurately search for a desired item among those featured on the website. It is important to provide search results which display desired products to the customer and which engage the customer; prompting the customer to complete a purchase transaction.

### SUMMARY OF THE INVENTION

According to the present invention in a first aspect, there is provided a computer implemented method comprising: a server receiving a query from a customer; a search module identifying a number of product listings corresponding to the query according to relevance scores; a re-rank module identifying a signal associated with a product listing for each of the number of product listings; the re-rank module calculating a signal score from a relevance score and a signal value for each of the number of product listings; the re-rank module creating query results comprising the number of product listings ordered according to the signal score; and the server transmitting the query results to the customer.

According to the present invention in a second aspect, there is provided a computer system comprising: a server programmed to: receive a query from a customer; a search module programmed to: identify a number of product listings corresponding to the query according to relevance scores; a re-rank module programmed to: identify a signal associated with a product listing for each of the number of product listings; calculate a signal score from a relevance score and a signal value for each of the number of product listings; create query results comprising the number of product listings ordered according to the signal score; and wherein the server is further programmed to: transmit the query results to the customer.

Suitably, the re-rank module is more specifically programmed to: identify a plurality of signals associated with a product listing for each of the number of product listings; and calculate a signal score from a relevance score and a plurality of signal values for each of the number of product listings.

Suitably, the re-rank module is more specifically programmed to: calculate a signal score from a relevance score, a signal value, and a signal weight for each of the number of product listings.

Suitably, the system more specifically comprises: a search module programmed to: identify a number of product listings corresponding to the query according to relevance scores and assigning a relevance score to each of the number of product listings; and a re-rank module programmed to: identify a signal for each of the number of product listings, the signal comprising a data value indicative of customer interaction with the product on a store website; and create query results comprising the number of product listings ordered according to the signal score to thereby account for customer interaction with the product in the query results.

Further features of the present invention are set out in the appended claims.

### BRIEF DESCRIPTION OF THE DRAWINGS

Non-limiting and non-exhaustive embodiments of the present invention are described with reference to the following figures, wherein like reference numerals refer to like parts throughout the various views unless otherwise specified.
FIG. 1 is a schematic block diagram of a computer system in accordance with the present invention.
FIG. 2 is a schematic block diagram of communication that may occur between different nodes of a computer system in accordance with the present invention.
FIG. 3 is a schematic block diagram of a method that may be executed by a computer system in accordance with the present invention.
FIG. 4 is a schematic block diagram of a server or server system in accordance with the present invention.
FIG. 5 is a schematic block diagram of one embodiment of a re-rank module in accordance with the present invention.
FIG. 6 is an example re-rank formula in accordance with the present invention.
FIG. 7 is a diagram illustrating the calculation of signal scores in accordance with the present invention.
FIG. 8 is a chart illustrating the re-rank of query results in accordance with the present invention.

Corresponding reference characters indicate corresponding components throughout the several views of the drawings. Skilled artisans will appreciate that elements in the figures are illustrated for simplicity and clarity and have not necessarily been drawn to scale. For example, the dimensions of some of the elements in the figures may be exaggerated relative to other elements to help to improve understanding of various embodiments of the present invention. Also, common but well-understood elements that are useful or necessary in a commercially feasible embodiment are often not depicted in order to facilitate a less obstructed view of these various embodiments of the present invention.

### DETAILED DESCRIPTION

In the following description, numerous specific details are set forth in order to provide a thorough understanding of the present invention. It will be apparent, however, to one having ordinary skill in the art that the specific detail need not be employed to practice the present invention. In other instances, well-known materials or methods have not been described in detail in order to avoid obscuring the present invention.

Reference throughout this specification to "one embodiment", "an embodiment", "one example" or "an example" means that a particular feature, structure or characteristic described in connection with the embodiment or example is included in at least one embodiment of the present invention. Thus, appearances of the phrases "in one embodiment", "in an embodiment", "one example" or "an example" in various places throughout this specification are not necessarily all referring to the same embodiment or example. Furthermore, the particular features, structures or characteristics may be combined in any suitable combinations and/or sub-combinations in one or more embodiments or examples.. In addition, it is appreciated that the figures provided herewith are for explanation purposes to persons ordinarily skilled in the art and that the drawings are not necessarily drawn to scale.

Embodiments in accordance with the present invention may be embodied as an apparatus, method, or computer program product. Accordingly, the present invention may take the form of an entirely hardware embodiment, an entirely software embodiment (including firmware, resident software, micro-code, etc.), or an embodiment combining software and hardware aspects that may all generally be referred to herein as a "module" or "system." Furthermore, the present invention may take the form of a computer program product embodied in any tangible medium of expression having computer-usable program code embodied in the medium.

Any combination of one or more computer-usable or computer-readable media may be utilized. For example, a computer-readable medium may include one or more of a portable computer diskette, a hard disk, a random access memory (RAM) device, a read-only memory (ROM) device, an erasable programmable read-only memory (EPROM or Flash memory) device, a portable compact disc read-only memory (CDROM), an optical storage device, and a magnetic storage device. Computer program code for carrying out operations of the present invention may be written in any combination of one or more programming languages.

Embodiments may also be implemented in cloud computing environments. In this description and the following claims, "cloud computing" may be defined as a model for enabling ubiquitous, convenient, on-demand network access to a shared pool of configurable computing resources (e.g., networks, servers, storage, applications, and services) that can be rapidly provisioned via virtualization and released with minimal management effort or service provider interaction, and then scaled accordingly. A cloud model can be composed of various characteristics (e.g., on-demand self-service, broad network access, resource pooling, rapid elasticity, measured service, etc.), service models (e.g., Software as a Service ("SaaS"), Platform as a Service ("PaaS"), Infrastructure as a Service ("IaaS"), and deployment models (e.g., private cloud, community cloud, public cloud, hybrid cloud, etc.).

The disclosure particularly describes how a store product search engine may re-rank search results based on signals associated with the product and result pages initially provided as results to the search query. In this manner, the search engine may provide more relevant search results to a customer and thereby increase the likelihood that the customer purchases a product from the store. The store may provide an interactive website to customers. The website may offer products for sale and information regarding those products and may include a search engine to allow a customer to search for a desired product by entering search terms.

Customers will typically enter search terms (i.e. queries) which describe the product, product attributes, or which attempt to include the name of the product. Often, the queries may result in unbalanced search results which do not provide adequate breadth or quality of search results to the customer. These queries may not yield adequate search results due to the queries aligning the search results to products and result pages which are less desirable as results for the customer even through these results are well aligned with the query in relevance scores. The search engine may be programmed to automatically re-rank search terms according to one or more signals associated with the relevance ranked search results initially provided in response to the query. The re-ranking may achieve search results which more accurately reflect the products that the customer desires to purchase.

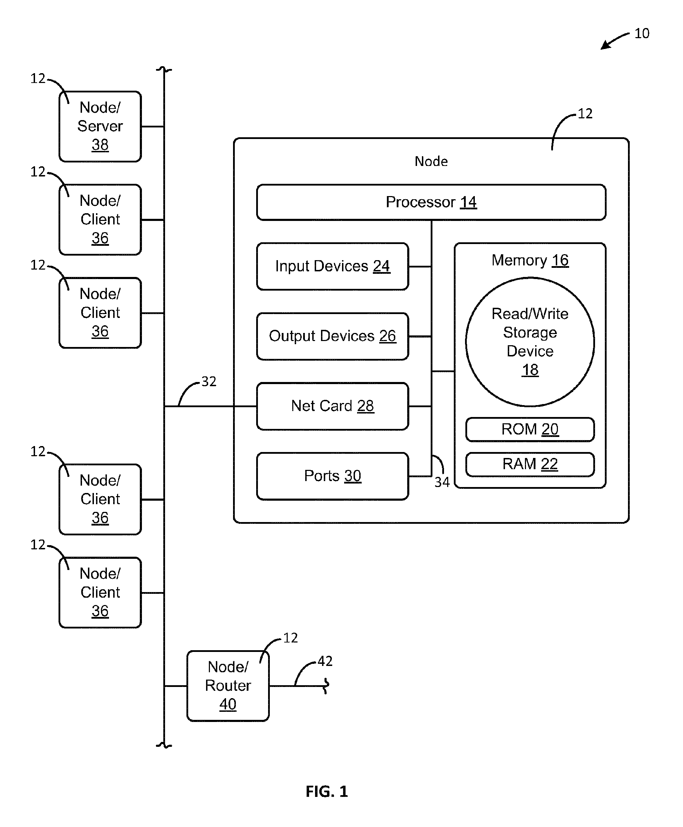

Referring to FIG. 1, an example system 10 may assist a human user such as a customer in accessing information such as in searching for a product which the human desires to purchase. The system 10 may provide a search engine which receives a query from a human, analyzes the query, and provides results to the human. The system 10 may receive queries and may provide the search results within a software framework such as an internet browser. According to one example of a system 10, the system 10 may operate on a limited search environment. For example, the system 10 may operate on a single store website or on a store product catalog. As such, the system 10 may analyze information from the website or catalog and provide the user results from the website or catalog. The system 10 may operate directly on data within the search environment or may operate on an index of the search environment as this may provide increased speed in providing search results to a user where the search environment is large.

Human users may enter search queries into the system 10 and receive results from the system 10. For example, a human user may enter a query or request for information into a system 10. The system 10 may respond by providing one or more results or listings to the user. The search results may be provided as a list of html links or the like; each link representing an individual search result (i.e. an individual document). The results or listings may initially be ranked or sorted according to relevance scores but may be modified by the server prior to providing the results to the user. The relevance scores may represent an assessment by the system 10 as to the relevance of the individual search result to the query. The relevance scores may be based on the frequency of occurrence of the search terms, the proximity of the search terms, the locations of the search terms within the result, etc.

A system 10 may apply an algorithm to generate modified search results. Accordingly, in response to query, a system 10 may provide modified results or listings based on criterion for the re-ranking of search results. In certain examples, re-ranked search results may be provided based on signals which are related to the individual search result listings initially provided by a relevance score. Signals used to re-rank the search results may be internal to the product or page or may be external to the product. The search engine may sequentially analyze the search results according to the signals with each step utilizing the scores from the previous step. Accordingly, a user query may result in modified search results which are tailored to preselected factors drawn from the search results.

Upon receiving search results, a user may interact with the system 10 by interacting with the search results. The user may, from the search results, select a particular link and navigate to the data associated with that link. The user may thus view a particular product within an electronic product catalog or within a store webpage. The user may view several products identified by several different search result links displayed among the search results. The user may select and purchase a product from among the search results. The system 10 may observe and store information about the user's interaction with the search results. Information about the user's interaction with the search results may be stored in a query log with the user query. The query log may thus contain various items of information such as the search terms or query entered by the user, the interaction of the user with the search terms (i.e. which items were viewed by the user), and the resulting action taken by the user (purchasing a product, no purchase, etc.). The query log may be utilized in tuning the system 10 by selecting appropriate signals as well as weight and boost tuning factors to provide search results which display desired products and results to a customer.

A system 10 in accordance with the present invention may provide, enable, or support the generation and/or application of modified or re-ranked results in response to queries in any suitable manner. In certain embodiments, a system 10 may be embodied as hardware, software, or some combination thereof. For example, in selected embodiments, a system 10 may include one or more nodes 12.

A node 12 may include one or more processors 14 or central processing units (CPUs) 14. A node 12 may also include memory 16. Such memory 16 may be operably connected to a processor 14 and include one or more devices such as a hard drive 18 or other non-volatile storage device 18, read-only memory (ROM) 20, random access memory (RAM) 22, or the like or a combination or sub-combination thereof. In selected embodiments, such components 14, 16, 18, 20, 22 may exist in a single node 12. Alternatively, such components 14, 16, 18, 20, 22 may be distributed across multiple nodes 12.

In selected embodiments, a node 12 may include one or more input devices 24 such as a keyboard, mouse, touch screen, scanner, memory device, communication line, and the like. A node 12 may also include one or more output devices 26 such as a monitor, output screen, printer, memory device, and the like. A node 12 may further include a network card 28, port 30, or the like to facilitate communication through a computer network 32. Internally, one or more busses 34 may operably interconnect various components 14, 16, 24, 26, 28, 30 of a node 12 to provide communication therebetween. In certain embodiments, various nodes 12 of a system 10 may contain more or less of the components 14, 16, 24, 26, 28, 30, 34 described hereinabove.

Different nodes 12 within a system 10 may perform different functions. For example, one or more nodes 12 within a system 10 may function as or be clients 36. Additionally, one or more nodes 12 within a system 10 may function as or be servers 38. Accordingly, a system 10 may include one or more servers 38 or the like serving files, data, applications, etc. to one or more clients 36 connected thereto. A system 10 may also include one or more nodes 12 that function as or are routers 40 and the like. Accordingly, one computer network 32 may be connected to other computer networks 42 via one or more routers 40.

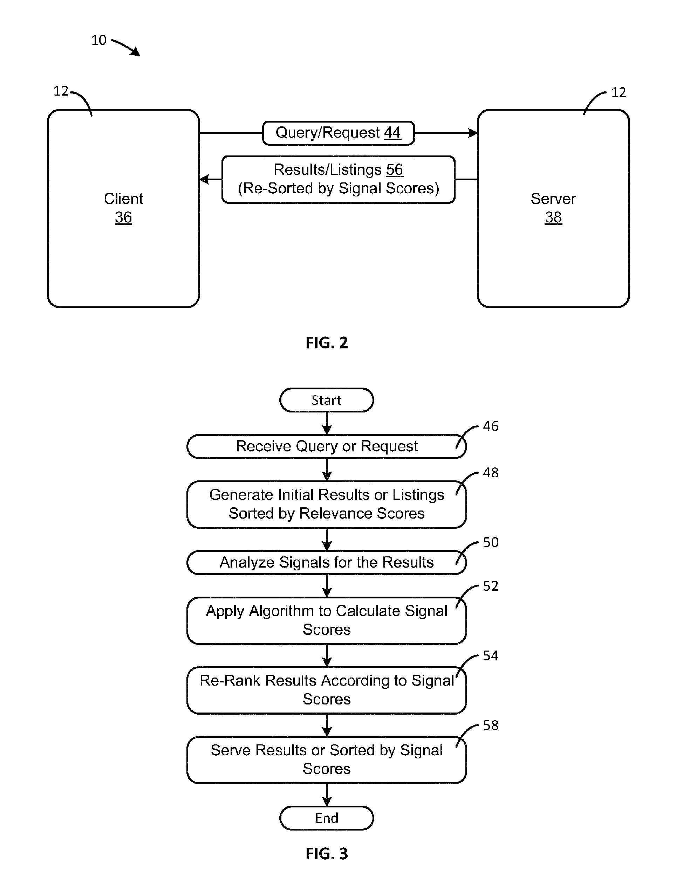

Referring to FIG. 2 and FIG. 3, in selected embodiments, a system 10 may provide, enable, or support the generation of re-ranked search results in the context of an exchange between nodes 12. For example, re-ranked search results may be used in connection with one or more exchanges between a client 36 and server 38. Accordingly, re-ranked search results may be applied to a plurality of listings passed between a client 36 and server 38.

For example, a client 36 may pass a query 44 or request 44 to a server 38. In general, such a query 44 or request 44 may be directed to certain content stored on, or accessed through, the server 38. Such content may have any suitable subject, combination of subjects, structure, or the like. For example, the content may comprise web pages, web postings, product listings (e.g., goods or services offered for sale), or the like or a combination or sub-combination thereof. In one example, a client 36 may pass a query 44 to a server 38 which relates to a product or products. The desired content may comprise web pages describing the product(s) and product listings offering the product(s) for sale. Particularly, the server 38 may store content related to a store website which offers the product(s) for sale to customers.

A server 38 may receive 46 the query 44 or request 44 and respond in any suitable manner. In one example, a server 38 may generate initial results or listings 48 which are generated by relevance to the query 44 and which are sorted by relevance scores in a received query 44. The server 38 can identify signals in the relevance listed search results and analyze 50 these signals for the search results. The server may then apply 52 an appropriate algorithm to calculate new signal scores for the individual search results based on the previous relevance scores and the signal(s). The server 38 may then re-rank 54 the search results according to the signal scores. The server 38 may then serve 58 a plurality of results 56 that are sorted by signal scores and which are more likely to be relevant to the user submitting such a query 44.

The flowchart in FIG. 3 illustrates the architecture, functionality, and operation of possible implementations of systems, methods, and computer program products according to certain embodiments of the present invention. In this regard, each block in the flowchart may represent a module, segment, or portion of code, which comprises one or more executable instructions for implementing the specified logical function(s). It will also be noted that each block of the flowchart illustration, and combinations of blocks in the flowchart illustration, may be implemented by special purpose hardware-based systems that perform the specified functions or acts, or combinations of special purpose hardware and computer instructions.

It should also be noted that, in some alternative implementations, the functions noted in the blocks may occur out of the order noted in the Figure. In certain embodiments, two blocks shown in succession may, in fact, be executed substantially concurrently, or the blocks may sometimes be executed in the reverse order, depending upon the functionality involved. Alternatively, certain steps or functions may be omitted if not needed.

Embodiments in accordance with the present invention may be embodied as an apparatus, method, or computer program product. Accordingly, the present invention may take the form of an entirely hardware embodiment, an entirely software embodiment (including firmware, resident software, micro-code, etc.), or an embodiment combining software and hardware aspects that may all generally be referred to herein as a "module" or "system." Furthermore, the present invention may take the form of a computer program product embodied in any tangible medium of expression having computer-usable program code embodied in the medium.

Any combination of one or more computer-usable or computer-readable media may be utilized. For example, a computer-readable medium may include one or more of a portable computer diskette, a hard disk, a random access memory (RAM) device, a read-only memory (ROM) device, an erasable programmable read-only memory (EPROM or Flash memory) device, a portable compact disc read-only memory (CDROM), an optical storage device, and a magnetic storage device. In selected embodiments, a computer-readable medium may comprise any non-transitory medium that can contain, store, communicate, propagate, or transport the program for use by or in connection with the instruction execution system, apparatus, or device.

Computer program code for carrying out operations of the present invention may be written in any combination of one or more programming languages, including an object-oriented programming language such as Java, Smalltalk, C++, or the like and conventional procedural programming languages, such as the "C" programming language or similar programming languages. The program code may execute entirely on one or more clients 36, servers 38, or combinations or sub-combinations thereof. In selected embodiments, one or more clients 36 and servers 38 may be positioned remotely with respect to one another. Accordingly, such nodes 12 may be connected to one another through any type of network, including a local area network (LAN) or a wide area network (WAN), or the connection may be made through the Internet using an Internet Service Provider.

Selected embodiments in accordance with the present invention may be described with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions or code. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer-readable medium that can direct a computer or other programmable data processing apparatus to function in a particular manner, such that the instructions stored in the computer-readable medium produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide processes for implementing the functions/acts specified in the flowchart and/or block diagram block or blocks.

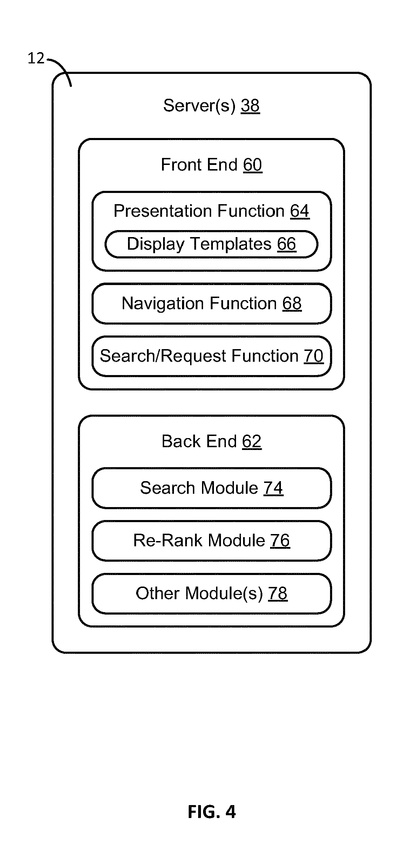

Referring to FIG. 4, in selected embodiments, a system 10 in accordance with the present invention may include one or more servers 38 supporting a website, mobile application, or the like or a combination thereof. One or more such servers 38 may comprise or support a "front end" 60 and/or a "back end" 62. A front end 60 may provide or support a user interface viewed or utilized by the human users of one or more clients 36. A back end 62, on the other hand, may perform, provide, or support the behind-the-scene work of processing queries, sorting listings, or the like or a combination thereof.

In certain embodiments, selected functions that may typically be associated with a front end 60 of a server 38 may be off loaded to one or more clients 36. For example, an application (e.g., a web browser or a mobile application) installed on a client 36 (e.g., a desktop computer, laptop computer, tablet computer, smart phone, electronic reader, music player, or the like of a human user) may provide a user interface for a system 10 in accordance with the present invention. Accordingly, in selected embodiments, one or more servers 38 may perform limited functions typically associated with a front end and may perform functions typically associated with a back end 62.

In selected embodiments, a front end 60 may include a presentation function 64 controlling the content and/or content format to be displayed via one or more clients 36 to the respective human users thereof. In certain embodiments, a presentation function 64 may include one or more display templates 66 defining the visual look supported by the front end 60 (e.g., the look of the various pages of a website or views or screens of an application). A front end 60 may also include a navigation function 68. A navigation function 68 may receive commands from a user via a client 36 and direct a presentation function 64 to display other templates, files, pages, screens, views, and the like.

A front end 60 may include a search or request function 70. A search or request function 70 may provide a mechanism through which one or more queries 44 may be passed to and/or received 46 by a server 38. The front end 60 may thus receive 46 queries 44 from customers through a search/request function 70 and may allow customers to view search results through the navigation function 68. The presentation function 64 may serve 54 search results 56 to a customer in the form of html links and the navigation function 68 may allow the customer to browse and view content within the search results 56.

In selected embodiments, a back end 62 may include a search module 74, a re-rank module 76, one or more other modules 78 as desired or necessary, or the like or a combination or sub-combination thereof. A search module 74 may identify, collect, or compile a plurality of relevance score sorted results that are potentially relevant to a query 44. A re-rank module 76 may receive the relevance score sorted results and identify signals related to the results, calculate signal scores for the results based on the relevance scores and the signals, and re-rank the results by the signal scores to improve the quality of the search results.

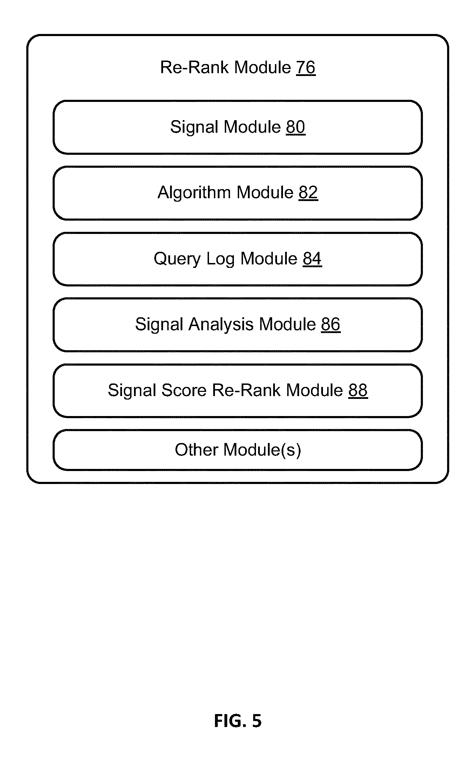

Referring to FIG. 5, a system 10 in accordance with the present invention may re-rank initial results for a query 44 according to signals related to the results. In selected embodiments, a re-rank module 76 may provide, enable, or support such a re-rank of the initial results. A re-rank module 76 may include any suitable arrangement of sub-components or modules and may include a signal module 80, an algorithm module 82, a query log module 84, a signal analysis module 86, a signal score re-rank module 88, and other modules 90 as may be necessary.

The search module 74 may receive a query 44 from the client node 36 and may analyze the query 44 to generate an initial results listing. In one example, the server 38 operates in connection with a store website which features products for sale as well as information regarding those products. The initial results listing may thus include a number of different products which have been analyzed by the search module according to their relevance to the query 44. The search module may identify terms from the query and may locate these terms within the product listings, evaluating the proximity, placement, etc. of the terms to create a relevance score. The search module 74 may rank the initial results by the relevance score.

The re-rank module 76 may receive the ranked initial results along with the relevance scores from the search module 74. The signal module 80 may identify signals associated with the results for further analysis of the initial results. The signal module 80 may identify a number of different signals used to evaluate the initial relevance ranked results. The signal module 80 may identify both internal signals and external signals which are used to further analyze the initial results. Various different signals may be used to re-rank the initial relevance ranked results to promote benefits within the search results.

Internal signals may be signals which are located within a product listing (i.e. internal to the listing). Internal signals may include: the item title, which may be used to include or exclude different variants of one particular item within the search results; the item category, which may be used to diversify the types of products present in the search results; the item description, which may be used to diversify the types of products present in the search results; the item seller (within a market place environment), to include items from a variety of different sellers; the item price history, which may be used to promote on sale or in demand items; the item sales volume in a previous time period, which may be used to promote popular items; average user ratings on items, which may be used to promote well reviewed items which achieve a high user acceptance; and the item age, which may be used to promote new items.

External signals may be signals which are outside of a product description. External signals may include: the real time price, which may be used to promote items which are on sale; the real time item customer engagement/interaction after search, which may evaluate customer interaction with items and promote items which generate a lot of interest among customers; the real time category customer engagement, which may be used to promote types of items which currently generate a lot of interest among customers; the item price range, which may be used to include different price levels of items or promote items in the query price range; the item popularity (i.e. the number of page views in a recent time period), which may be used to promote items which are currently popular with customers; and indications of customers liking an item (i.e. customers clicking on links on product pages within the store site to like, tweet, google plus, etc. to promote the item on social media)

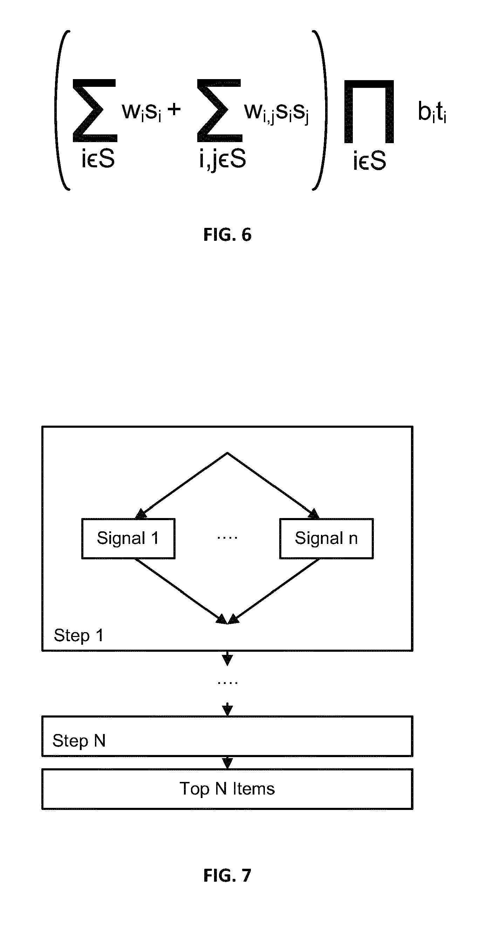

The algorithm module 82 may provide an algorithm used to calculate signal scores from the initial relevance scores and from the signals. FIG. 6 shows an exemplary formula which may be used to calculate a signal score. In the formula: i and j represent a signal, S represents the set of signals, w (i.e. wᵢ) represents a weight factor associated with the signal i, b (i.e. bᵢ) represents a boost factor associated with a signal i, and s and t represent different components of a signal where each signal may include an additive component s and a multiplicative component t. Thus, a signal may be represented by [(s,t)].

The query log module 84 may include information regarding previous customer search queries 44, search results 56, as well as information regarding the customer interaction with the website which resulted from the query results 56. The query log module 80 may include information regarding queries 44, results 56 which are sorted by relevance scores (such as scores which are based on the presence, location, proximity, etc. of the query terms in a candidate result page), results 56 which are re-ranked according to signal scores, and customer interaction with the results 56 (such as views of the result documents or products, purchase of a result product, etc.). The query log module 84 may thus include a query log which comprises the combined query/results history for the store website as well as the customer interaction with the website resulting from the query/results.

The query log module 84 may be used in identifying signals and in selecting factors such as boost and weight to tune the algorithm used to evaluate initial relevance scored results. The query log module 84 may include information about the signals, the expected signal value or range of values, thresholds for consideration of a signal, weight and boost factors associated with signals, etc. The query log may provide website customer interaction history which may be used to determine appropriate values for these items.

The signal analysis module 86 may use the formula to calculate the effect of signals i and j on the initial relevance score of a search result. FIG. 7 shows a process for evaluating signals for a product or search result. The signal analysis module 86 may be used to evaluate the signals and various associated with the formula of FIG. 6. For a given product, search, or search engine, n signals may be considered relevant in modifying the relevance scored initial search results. The server 38 may determine that the re-rank module 76 apply the formula to the top N products returned by the initial relevance analysis of the items potentially relevant to the search results. As such, the process may be applied to create final signal scores for N items.

The sigma part of the formula is essentially the sum of the products of weight factors and additive signal components. Thus, the sigma part of the formula may be the sum of wᵢ*sᵢ and wᵢⱼ*sᵢ*sⱼ, adding up the signal additive components with corresponding weights. The term wᵢⱼ*sᵢ*sⱼ represents the non-linear additive component. The pi part of the formula is the multiplicative component. The pi part of the formula multiplies the multiplicative signal components with the boost factors; multiplying all of the tᵢ*bᵢ together. Finally, the sigma part and the pi part of the formula may be multiplied together to produce a final signal score for the item. The item signal score may be combined with the initial item relevance score.

As is illustrated in FIG. 7, the formula may be applied in steps or iteratively to analyze the signals relevant to a query 44. Initially, all fields (i.e. signals, weight values, boost values, etc.) may be gathered and prepared for subsequent steps. Each step may involve one or multiple signals. At each step, the scores from previous steps together with the information which is gathered are available in applying the signals for that step.

The formula may allow different signals to be selected as relevant to search results, such as search results within a product webpage. The formula allows different weights to be assigned to the signals so that each signal may be tuned to have a particular contribution in adjusting the position of a product within the search results. In this manner, some signals may be assigned a strong influence in changing the signal score of a product and adjusting its position within the search results. Other signals may be assigned a minor influence in changing the signal score of the product, and still other signals may not be selected in changing the signal score of the product.

Once signal scores are calculated and assigned to the products, the signal score re-rank module 88 may re-rank the initial search results according to the determined signal scores. The re-ranked search results 56 may then be provided 58 to a customer.

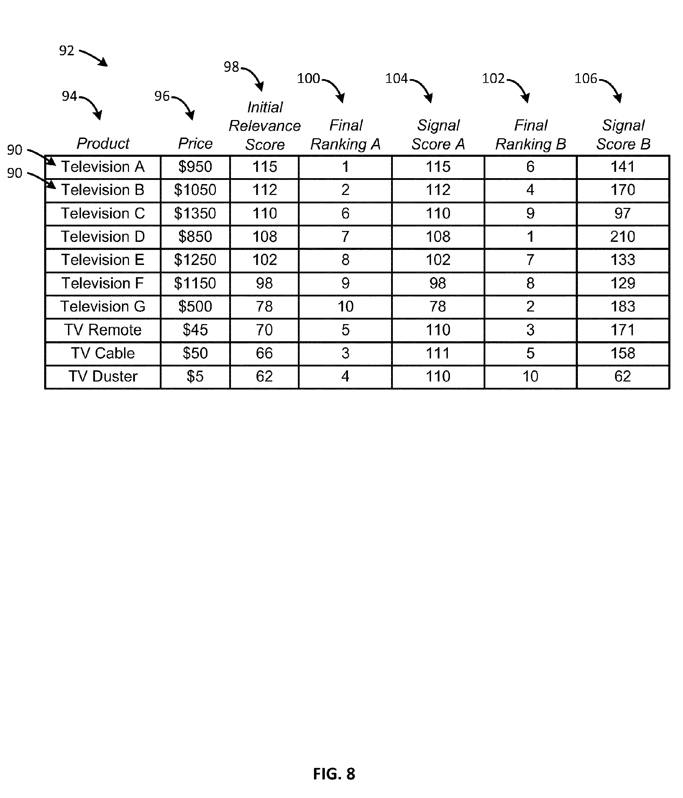

Referring to FIG. 8, the effects of the re-rank module 76 are shown. In the illustrated table 92, a plurality of results 56 for items related to a query 44 for a "television." are shown. To approximate a search result 56 with individual product listings 90 and facilitate understanding of the example, a product title 94 and product price 96 are shown. The various products are listed high-to-low according to an initial relevance score 98 (i.e. as they may be initially calculated by a search module 74 in response to a query 44). These initial relevance scores and the initial product ranking are not presented to the customer, but are used internally by the re-rank module 76. Additionally, two exemplary final rankings 100 and 102 corresponding to respective signal scores 104 and 106 are shown. The numbers listed in the final rankings 100 and 102 correspond to rank (as re-ranked by the re-rank module 76) and the search results would be presented to a customer in that order. Accordingly, a product 94 corresponding to "1" in a final ranking 100 or 102 would be the highest ranked product 94, a product 94 corresponding to "2" in a final ranking 100 or 102 would be the second highest ranked product 94, and so forth.

In the table 92, each final ranking 100 and 102 and the associated signal score 104 and 106 corresponds to the algorithm of Figure 7 with different selected signals, weight, and boost factors applied. In the first final ranking 100, the signals, weight, and boost factors may be selected primarily to include products from different product categories in the search results. In the second final ranking 102, the signals, weight, and boost factors may be selected primarily to emphasize products which have achieved high recent sales volume and customer interaction. The table 92 illustrates how the signals, weight factors, and boost factors can be adjusted to achieve different product goals in providing search results to a customer. In this manner, a sales analyst with a store may review the query log or other sales data and determine that particular products, product types, product attributes, etc. are achieving a high customer acceptance and may alter the algorithm to adjust the nature of the search results 56 provide to a customer instead of simply providing results listed by a relevance score.

The above description of illustrated examples of the present invention, including what is described in the Abstract, are not intended to be exhaustive or to be limitation to the precise forms disclosed. While specific embodiments of, and examples for, the invention are described herein for illustrative purposes, various equivalent modifications are possible without departing from the broader spirit and scope of the present invention. Indeed, it is appreciated that the specific example voltages, currents, frequencies, power range values, times, etc., are provided for explanation purposes and that other values may also be employed in other embodiments and examples in accordance with the teachings of the present invention.

## Claims

1. A computer implemented method comprising:
a server (38) receiving a query from a customer;
a search module (74) identifying a number of product listings corresponding to the query according to relevance scores;
a re-rank module (76) identifying a signal associated with a product listing for each of the number of product listings;
the re-rank module calculating a signal score from a relevance score and a signal value for each of the number of product listings;
the re-rank module creating query results comprising the number of product listings ordered according to the signal score; and
the server transmitting the query results to the customer.

2. The method of claim 1, wherein the relevance scores are based on frequency of occurrence of query terms, proximity of the query terms, or locations of the query terms within a product listing.

3. The method of claim 1, wherein the number of product listings are selected from a store webpage and represent products for sale on the store webpage.

4. The method of claim 1, wherein the signal comprises data related to a product for sale on a store webpage.

5. The method of claim 4, wherein the signal is a data value which is internal to the product listing and wherein the signal is selected from the group consisting of a product title, a product category, product sales in a preceding time period, product price history, customer average rating on a product, and how recently the product was introduced.

6. The method of claim 4, wherein the signal is a data value which is external to the product listing and wherein the signal is selected from the group consisting of real time product price, real time amount of customer interaction with a product, real time customer interaction with a product category, a product price range, a number of product page views in a recent time period, and social media indications of customer approval of an item.

7. The method of claim 1, wherein the method more specifically comprises:
a re-rank module (76) identifying a plurality of signals associated with a product listing for each of the number of product listings; and
the re-rank module calculating a signal score from a relevance score and a plurality of signal values for each of the number of product listings.

8. The method of claim 1, wherein the method more specifically comprises:
the re-rank module (76) calculating a signal score from a relevance score, a signal value, and a signal weight for each of the number of product listings.

9. The method of claim 1, wherein the method more specifically comprises:
a search module (74) identifying a number of product listings corresponding to the query according to relevance scores and assigning a relevance score to each of the number of product listings;
a re-rank module (76) identifying a signal for each of the number of product listings, the signal comprising a data value indicative of customer interaction with the product on a store website; and
the re-rank module creating query results comprising the number of product listings ordered according to the signal score to thereby account for customer interaction with the product in the query results.

10. A computer system comprising:
a server (38) programmed to:
receive a query from a customer;
a search module (74) programmed to:
identify a number of product listings corresponding to the query according to relevance scores;
a re-rank module (76) programmed to:
identify a signal associated with a product listing for each of the number of product listings;
calculate a signal score from a relevance score and a signal value for each of the number of product listings;
create query results comprising the number of product listings ordered according to the signal score; and wherein
the server is further programmed to:
transmit the query results to the customer.

11. The system of claim 10, wherein the relevance scores are based on frequency of occurrence of query terms, proximity of the query terms, or locations of the query terms within a product listing.

12. The system of claim 10, wherein the number of product listings are selected from a store webpage and represent products for sale on the store webpage.

13. The system of claim 10, wherein the signal comprises data related to a product for sale on a store webpage.

14. The system of claim 4, wherein the signal is a data value which is internal to the product listing and wherein the signal is selected from the group consisting of a product title, a product category, product sales in a preceding time period, product price history, customer average rating on a product, and how recently the product was introduced.

15. The system of claim 4, wherein the signal is a data value which is external to the product listing and wherein the signal is selected from the group consisting of real time product price, real time amount of customer interaction with a product, real time customer interaction with a product category, a product price range, a number of product page views in a recent time period, and social media indications of customer approval of an item.
